Europäisches Patentamt

European Patent Office

Office européen des brevets

(19)

(11) Publication number: **0 040 986**
**B1**

(12) **EUROPEAN PATENT SPECIFICATION**

(45) Date of publication of patent specification: **14.03.84**   (51) Int. Cl.³: **C 02 F  11/04, C 02 F  11/18**

(21) Application number: **81302316.5**

(22) Date of filing: **26.05.81**

(54) **A method and apparatus for the treatment of sewage sludge.**

(30) Priority: **27.05.80 GB  8017315**

(43) Date of publication of application:
**02.12.81 Bulletin 81/48**

(45) Publication of the grant of the patent:
**14.03.84 Bulletin 84/11**

(84) Designated Contracting States:
**AT BE CH DE FR IT LI LU NL SE**

(56) References cited:
**GB - A - 381 799**
**GB - A - 1 050 274**
**US - A - 1 930 457**

(73) Proprietor: **WALKER ENGINEERING LIMITED**
**Walker House Malinslee**
**Telford Shropshire TF3 4HA (GB)**

(72) Inventor: **Neill, John**
**20 Raven Lane**
**Ludlow Shropshire (GB)**

(74) Representative: **Jennings, Nigel Robin et al,**
**KILBURN & STRODE 30 John Street**
**London WC1N 2DD (GB)**

Courier Press, Leamington Spa, England.

## A method and apparatus for the treatment of sewage sludge

The invention relates to a method and apparatus for the treatment of sewage sludge and is concerned with such a method in which the sludge in liquid or slurry form is heated and then subjected to an anaerobic digestion.

The treatment and disposal of sewage, both human and animal, is becoming increasingly problematic as a result both of the increase in the volume to be disposed of and the steady increase in the environmental and health legislation relating to the disposal of sewage. Sewage is naturally rich in nitrates and other chemicals valuable for use as fertilisers, but can not be used for this purpose in its crude form because it tends to scorch vegetation and because it is unacceptable on environmental grounds due to its smell and on health grounds because untreated sewage can spread disease to both humans and livestock. The normal method of treatment is to subject the sewage (after screening and removal of detritus and storm water) to a sedimentation process, in which the main bulk of the solid matter in the sewage is removed as primary sludge.

It is known to subject the resulting sludge to an anaerobic bacterial digestion or decomposition, and once this process is complete after several days the sludge becomes relatively odour-free and is much reduced in volume, the solids removed being converted to methane gas. However the fermentation only proceeds slowly at ambient temperature and it is therefore desirable to heat the sewage to a temperature of about 40°C to accelerate the process. This may be done by any desired method, but typically steam or hot water heating is used by means of a heat exchanger but steam or hot water heating is known using a heat exchanger immersed in the sludge (US—A—1930457, GB—A—381799 and GB—A—1050274). This necessitates the provision of a steam or hot water generator which is relatively thermally inefficient and expensive in capital cost. In addition, in order to satisfy the health requirements for final disposal of the sludge as a fertiliser it is necessary to sterilise the sludge to kill potentially harmful pathogens, and this is typically done by a further steam heating to a higher temperature, which is again expensive.

It is an object of the present invention to devise a method of treating sewage sludge of the type referred to above which is more economical than those previously used as regards both capital and running costs, and it is a further object to devise such a method which is more effective than those previously used, as regards achieving sterility of the sludge or the final organic residue.

In accordance with the present invention the method includes heating the sludge, e.g. to a temperature of between 30 and 50°C, by means of a burner whose combustion chamber is substantially immersed in the sludge and by spraying sludge into the combustion chamber of the burner there by also substantially sterilising the sludge. Preferably the sludge is transferred after the heating to a separate digester where the fermentation takes place though it would be possible for the heating and fermentation to take place in the same container.

The use of a burner immersed in the sludge to be heated leads to a considerable economy of energy since no thermal energy can be lost from the burner directly to the atmosphere. In addition, such burners are cheap to manufacture since the combustion chamber may be formed only of thin metal plate since it is cooled by the surrounding liquid and no refractory materials are therefore required. More importantly, however, it has been found that injecting the sludge into the combustion chamber of the burner, which is preferably done at a speed sufficient to break up the stream of sludge into drops, e.g. at a speed of between 20 and 50 and preferably between 30 and 40 metres per second, serves to kill substantially all the bacteria and other pathogens in the sludge and thus to render the sludge substantially sterile. The reason why this occurs is not fully understood but it is believed to be a result of the very high rate of heating of the sludge drops that occurs in the combustion chamber and is perhaps promoted also by the relatively high level of radiant energy in the combustion chamber. The ability to both heat and sterilise the sludge in a single step saves both time and a considerable amount of energy. The anaerobic bacteria which are required for the subsequent digestion will be killed also, but these can simply be added later or are already present in the digester.

The burner is preferably a gas burner and in the preferred embodiment the gas for the burner is produced by the anaerobic digestion of sludge. Thus, preferably gas is withdrawn from the digester, compressed and mixed with air and then fed to the burner. This has considerable economic advantages since the necessary heat is produced by the combustible gas evolved during the digestion and thus no external energy input is required. The invention also relates to a plant for carrying out the method and according to a further aspect of the invention a plant for the treatment of sludge in liquid or slurry form includes a container for the anaerobic digestion of heated sludge and a container for heating sludge within which is a burner whose combustion chamber, in use, is substantially immersed in sludge, the wall of the combustion chamber having at least one inlet connected to the outlet of a first pump so that, in use, when the burner is ignited sludge may be sprayed by the first pump into the combustion chamber.

The digester and the heating container may be one and the same, but preferably they are separate in which case a second pump is provided to transfer heated sludge from the heating container to the digester. In the preferred embodiment there is a gas line leading from the digester to the burner via a device for mixing the combustible gas evolved in the digester with air, the line further including a pump for positively withdrawing the gas and pressurising it.

Further features and details of the invention will be apparent from the following description of one specific embodiment which is given by way of example with reference to the accompanying drawings, in which:—

Figure 1 is a diagrammatic partially sectioned elevation of a submerged combustion gas burner; and

Figure 2 is a schematic representation of a sewage sludge treatment plant.

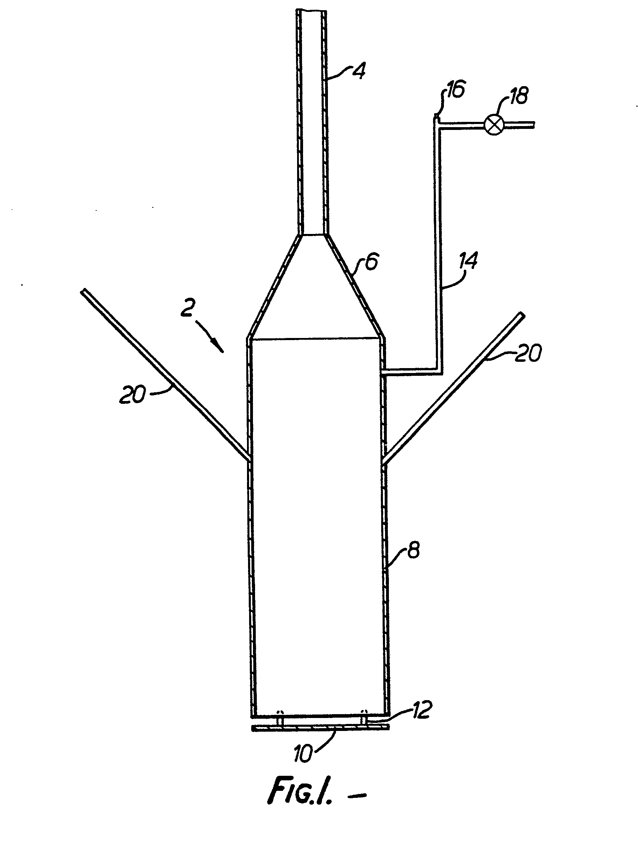

The submerged combustion burner which is illustrated in Figure 1 and generally designated 2 is a one-piece construction of thin steel plate and comprises a gas supply pipe 4 integral with a downwardly divergent frustoconical portion 6 which is in turn integral with a cylindrical combustion chamber 8. A flat circular plate 10 is connected to, and spaced from, the lower end of the combustion chamber by four straps 12. In use, the entire burner is immersed in liquid, in this case sludge, and the gas, which is a mixture of combustible gas and air, which flows down the supply pipe may be caused to burn with a stable flame. All the heat which is produced is conducted directly to the sludge through the wall of the combustion chamber and by means of the exhaust gas which passes out of the lower end of the burner and bubbles through the sludge which results in an extremely efficient thermal transfer. Due to the cooling effect of the sludge the wall of the combustion chamber is not destroyed by the heat.

To ignite the gas the burner may be provided with a pilot gas burner, but in this embodiment the burner is provided with an ignition or flash tube 14 in which is situated a spark igniter 16 and which communicates with the atmosphere via a solenoid valve 18. When it is desired to use the burner, gas is caused to flow down the pipe 4 and the solenoid valve 18 is opened. The excess pressure within the combustion chamber causes gas to pass up the flash tube 14 which is then ignited by the igniter 16. A flame front passes down the tube 14, thus igniting the gas in the combustion chamber and the solenoid valve is closed. Whilst the gas is burning, exhaust gases bubble out of the combustion chamber around the plate 10, and the turbulence caused serves to promote mixing of the heated sludge.

About one third of the way down the combustion chamber there are provided two sludge injection openings, whose diameter may be between 10 and 30 mm, in this case about 18 mm, each connected to a pipe 20 through which, in use, sludge is injected at high velocity as described in more below.

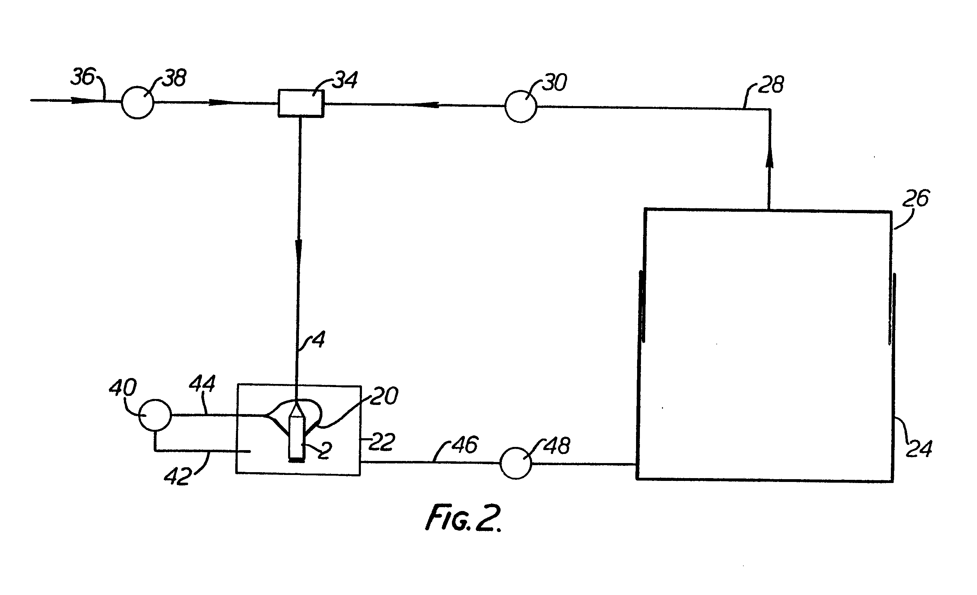

Figure 2 shows a sewage sludge treatment installation in which the burner 2 is shown totally immersed in sludge in a heating tank 22. Situated adjacent the heating tank is a very much larger cylindrical digester or fermentation tank 24 constructed in the manner of a gasometer so that its lid or roof 26 is free to move vertically under the action of gas produced within the digester. A gas line 28 passes through the lid 26 and communicates with the interior of the digester and is connected to a gas mixer 34 via a pump 30. The mixer 34 has a further inlet line 36 connected to atmosphere via a pump 38, and an outlet line which is connected to or integral with the gas inlet 4 of the submerged gas burner 2. Outside the sludge heating tank 22 there is a further pump 40 whose inlet line 42 is within the heating tank and whose outlet line 44 is connected to the two sludge injection pipes 20 on the gas burner.

The operation of the plant will now be described, and it will be assumed that the digester 24 already contains an amount of heated and fermenting sludge. Firstly, the heating tank 22 is filled with sludge in slurry form and the pump 30 is then switched on to withdraw and pressurise some of the gas within the digester 24 which has been produced by the anaerobic fermentation within it. This gas comprises largely, that is to say of the order of 70%, methane with the balance being carbon dioxide and impurities and is thus strongly combustible. This gas is pressurised and pumped to the mixer where it is mixed with air pressurised by the pump 38 and the resulting mixture is passed down into the submerged combustion burner where it is ignited as described above. The pump 40 is then switched on and withdraws sludge from the tank 22 and then injects it through the pipes 20 into the combustion chamber of the burner at a speed of between 30 and 40 metres per second. This speed is sufficient to break the streams of sludge into relatively fine droplets which are rapidly heated and then drop out of the bottom of the combustion chamber. This heating not only brings the sludge up to the temperature required for fermentation, e.g. about 40°C, but also the intense turbulence and rapid heating serve to kill substantially all of the potentially dangerous pathogens in the sludge. Once all the sludge in the tank 22 has reached the desired temperature the burner is extinguished and the sludge is transferred to the digester 24, or to a different digester, by means of a pipe 46 and a pump 48, where it too begins to ferment.

It will be appreciated that a great many modifications and alterations may be made to the apparatus and method described above. In particular, although a batch process has been disclosed the method may be continuous. In particular the inlet 42 of the pump 40 may be in an additional holding tank and the temperature of the sludge in the tank 22 may be held permanently at the desired value. Thus fresh sludge is continually supplied to the heating tank and continuously withdrawn at the same rate to the digester. In addition it is naturally not essential that the combustible gas which is fed to the burner is provided by the same digester as that to which the heated sludge is transferred.

## Claims

1. A method of treating sewage sludge in a liquid or slurry form comprising heating the sludge by providing heating devices immersed in the sludge and then subjecting it to an anaerobic digestion, characterised in that the heating is effected by a burner (2) whose combustion chamber (8) is substantially immersed in the sludge and by spraying sludge into the combustion chamber (8) of the burner (2) thereby also substantially sterilising the sludge.

2. A method as claimed in Claim 1 characterised in that the sludge is heated to a temperature of between 30 and 50°C.

3. A method as claimed in Claim 1 or Claim 2 characterised in that the sludge is transferred after the heating to a separate digester (24) in which the digestion takes place.

4. A method as claimed in any one of the preceding claims characterised in that the sludge is sprayed into the combustion chamber (8) at a speed of between 20 and 50 metres per second.

5. A method as claimed in any one of the preceding claims characterised in that the burner (2) is a gas burner and the gas produced by the anaerobic digestion is fed to the burner and serves as the fuel for the burner.

6. Plant for the treatment of sewage sludge in liquid or slurry form including a container (24) for anaerobic digestion of heated sludge and a container (22) for heating the sludge in which container there is provided a heating device which, in use, is immersed in the sludge, characterised by a burner (2) within the container (22) for heating the sludge whose combustion chamber (8), in use, is substantially immersed in sludge, the wall of the combustion chamber (8) having at least one inlet (20) connected to the outlet of a first pump (40) so arranged that, in use, when the burner (2) is ignited sludge may be sprayed by the first pump (40) into the combustion chamber (8).

7. Plant as claimed in Claim 8 in which the two containers are separate characterised by a second pump (48) arranged to transfer heated sludge from the heating container (22) to the digestion container (24).

8. Plant as claimed in Claim 6 or Claim 7 characterised in that the burner (2) is a gas burner and that a gas line (28) is provided leading from the digestion container (24) to the burner (2) via a device (34) for mixing the combustible gas evolved, in use, in the digestion container (24) with air, and that the line (28) further includes a second pump (30) for positively withdrawing the gas from the digestion container (24), pressurising it and feeding it to the burner.

## Patentansprüche

1. Verfahren zum Behandeln von Klärschlamm in flüssiger oder aufgeschlämmter Form, bei dem der Schlamm dadurch erwärmt wird, daß in den Schlamm eingetauchte Heizeinrichtungen vorgesehen werden, und bei dem der Schlamm danach einer anaeroben Gärung unterzogen wird, dadurch gekennzeichnet, daß die Erwärmung durch einen Brenner (2), dessen Verbrennungskammer (8) im wesentlichen in den Schlamm eingetaucht ist, und dadurch erfolgt, daß Schlamm in die Verbrennungskammer (8) des Brenners (2) gesprüht wird, wobei der Schlamm auch im wesentlichen sterilisiert wird.

2. Verfahren nach Anspruch 1, dadurch gekennzeichnet, daß der Schlamm auf eine Temperatur zwischen 30° und 50°C erwärmt wird.

3. Verfahren nach Anspruch 1 oder Anspruch 2, dadurch gekennzeichnet, daß der Schlamm nach der Erwärmung zu einer gesonderten Vergärungseinrichtung (24) gebracht wird, in der die Vergärung stattfindet.

4. Verfahren nach einem der vorhergehenden Ansprüche, dadurch gekennzeichnet, daß der Schlamm in die Verbrennungskammer (8) mit einer Geschwindigkeit zwischen 20 und 50 Metern pro Sekunde eingesprüht wird.

5. Verfahren nach einem der vorhergehenden Ansprüche, dadurch gekennzeichnet, daß der Brenner (2) ein Gasbrenner ist, und daß das bei der anaeroben Gärung erzeugte Gas dem Brenner als Brennstoff zugeführt wird.

6. Anlage zum Behandeln von Klärschlamm in flüssiger oder aufgeschlämmter Form, mit einem Behälter (24) für die anaeroben Gärung von erwärmtem Schlamm und einem Behälter (22) zum Erwärmen des Schlamms, in welchem Behälter eine Heizeinrichtung (8) vorgesehen ist, die im Betrieb in den Schlamm eingetaucht ist, gekennzeichnet durch einen Brenner (2) innerhalb des Behälters (22) zum Erwärmen des Schlammes, dessen Verbrennungskammer (8) im Betrieb im wesentlichen in Schlamm eingetaucht ist, wobei die Wand der Verbrennungskammer (8) mindestens einen an den Ausgang einer ersten Pumpe (40) angeschlossenen Eingang (20) aufweist, derart, daß im Betrieb, wenn der Brenner (2) gezündet ist, Schlamm durch die erste Pumpe (40) in die Verbrennungskammer (8) gesprüht wird.

7. Anlage nach Anspruch 8, bei der die beiden Behälter getrennt sind, gekennzeichnet durch eine zweite Pumpe (48) durch die erwärmter Schlamm aus dem Aufwärmbehälter (22) in den Gärungsbehälter (24) gefördert wird.

8. Anlage nach Anspruch 6 oder Anspruch 7, dadurch gekennzeichnet, daß der Brenner (2) ein Gasbrenner ist, daß eine Gasleitung (28) vorgesehen ist, die von dem Gärungsbehälter (24) zu dem Brenner (2) über eine Mischeinrichtung (34) führt, durch die das sich in dem Gärungsbehälter (24) während des Betriebs entwickelnde, brennbare Gas mit Luft gemischt wird, und daß die Leitung (28) des weiteren eine zweite Pumpe (30) aufweist, um das Gas aus dem Gärungsbehälter (24) positiv abzuziehen, es zu verdichten und es dem Brenner zuzuführen.

**Revendications**

1. Procédé pour traiter de la boue d'eau d'égout sous forme d'un liquide ou d'une suspension, suivant lequel on chauffe la boue à l'aide de dispositifs de chauffage qui y sont immergés, puis on soumet la boue à une digestion anaérobie, caractérisé en ce qu'on effectue le chauffage au moyen d'un brûleur (2) dont la chambre de combustion (8) est en substance immergée dans la boue et on pulvérise de la boue dans la chambre de combustion (8) du brûleur (2) de manière en substance à stériliser la boue.

2. Procédé suivant la revendication 1, caractérisé en ce qu'on chauffe la boue à une température comprise entre 30 et 50°C.

3. Procédé suivant la revendication 1 ou 2, caractérisé en ce qu'on transfère la boue après chauffage dans un digesteur (24) séparé dans lequel la digestion se produit.

4. Procédé suivant l'une quelconque des revendications précédentes, caractérisé en ce qu'on pulvérise la boue dans la chambre de combustion (8) à une vitesse comprise entre 20 et 50 mètres par seconde.

5. Procédé suivant l'une quelconque des revendications précédentes, caractérisé en ce que le brûleur (2) est un brûleur à gaz et le gaz produit par la digestion anaérobie est introduit dans le brûleur et sert de combustible pour celui-ci.

6. Installation pour le traitement de boue d'eau d'égout sous forme d'un liquide ou d'une suspension comprenant un récipient (24) pour la digestion anaérobie de la boue chauffée et un récipient (22) pour le chauffage de la boue dans lequel est prévu un dispositif de chauffage qui, en service, est immergé dans la boue, caractérisée par un brûleur (2) dans le récipient (22) pour chauffer la boue, dont la chambre de combustion (8), en service, est en substance immergée dans la boue, la paroi de la chambre de combustion (8) comportant au moins une entrée (20) raccordée à la sortie d'une première pompe (40) agencée de manière qu'en service, lorsque le brûleur (2) est allumé, la boue puisse être pulvérisée par la première pompe (40) dans la chambre de combustion (8).

7. Installation suivant la revendication 8, dans laquelle les deux récipients sont séparés, caractérisée par une seconde pompe (48) propre à transférer de la boue chauffée du récipient de chauffage (22) dans le récipient de digestion (24).

8. Installation suivant la revendication 6 ou 7, caractérisée en ce que le brûleur (2) est un brûleur à gaz et une conduite de gaz (28) est prévue et va du récipient de digestion (24) au brûleur (2) par l'intermédiaire d'un dispositif (34) destiné à mélanger le gaz combustible formé, en service, dans le récipient de digestion (24) avec de l'air, et la conduite (28) comprend, en outre, une seconde pompe (30) destinée à soutirer positivement le gaz du récipient de digestion (24), à le mettre sous pression et à le refouler vers le brûleur.

Fig.l. —

1

Fig.2.